# FASCICULE DE BREVET EUROPEEN

(11) **EP 3 543 065 B1**
(45) Date de publication et mention de la délivrance du brevet: **09.09.2020**
(21) Numéro de dépôt: 19163923.6
(22) Date de dépôt: 19.03.2019
(51) Int. Cl.: B60N 2/02, B60N 2/00, B60N 2/56, B60N 2/90

(54) **SYSTÈME POUR SIÈGE DE VÉHICULE COMPRENANT UN DISPOSITIF FONCTIONNEL, UNE INTERFACE D'ENTRÉE ET UN DISPOSITIF DE COMMANDE**
SYSTEM FÜR FAHRZEUGSSITZ, DAS EINE FUNKTIONELLE VORRICHTUNG, EINE EINGANGSSCHNITTSTELLE UND EINE STEUERVORRICHTUNG UMFASST
SYSTEM FOR VEHICLE SEAT COMPRISING A FUNCTIONAL DEVICE, AN INPUT INTERFACE AND A CONTROL DEVICE

(30) Priorité: 21.03.2018 FR 1852401
(43) Date de publication de la demande: 25.09.2019
(73) Titulaire: FAURECIA Sièges d'Automobile, 92000 Nanterre (FR)
(72) Inventeur: LELIEVRE, François, 92160 ANTONY (FR); PETIPHAR, Pierre-Henri, 91150 ETAMPES (FR); CAZES, Christophe, 78000 VERSAILLES (FR)
(74) Mandataire: Plasseraud IP

(56) Documents cités:
- FR-A1- 2 977 221
- US-A1- 2005 238 339
- US-A1- 2015 105 641
- US-A1- 2018 134 116

## Description

### Domaine technique de l'invention

L'invention concerne les véhicules et notamment les véhicules automobiles. L'invention concerne également les sièges pour véhicule et plus spécifiquement les systèmes pour de tels sièges qui comprennent un dispositif fonctionnel ayant notamment pour fonction d'assurer le confort des utilisateurs de ces sièges.

### Arrière-plan technologique de l'invention

Un véhicule comprend généralement au moins un siège destiné à accueillir un conducteur ou un passager du véhicule. Le siège peut être destiné à accueillir une seule personne, lorsqu'il s'agit d'un siège individuel, par exemple disposé à l'avant du véhicule. Le siège peut aussi faire partie d'une banquette susceptible d'accueillir plusieurs personnes, lorsqu'il s'agit par exemple d'une banquette arrière de véhicule. Ainsi, au sens de l'invention, le terme « siège » désigne aussi bien un siège individuel, qu'une partie d'une banquette, que la banquette elle-même. En outre, le terme « siège » selon l'invention désigne aussi bien un siège avant du véhicule qu'un siège arrière du véhicule. De même, l'invention peut être mise en œuvre pour des sièges destinés à tout type de véhicule et notamment à des véhicules automobiles.

Un siège de véhicule est connu de la demande de brevet US 2005/238339 A1, qui divulgue un dispositif d'alimentation en air pour un tel siège de véhicule, ledit dispositif d'alimentation comprenant un dispositif de commande prévu pour ajuster l'intensité ou la température d'un flux d'air appliqué sur la région de la tête, des épaules et la nuque d'un occupant du siège.

Un autre siège de véhicule est connu de la demande de brevet FR 2 977 221 A1, qui divulgue un procédé et un système de personnalisation et de configuration à la volée d'un véhicule, prévu pour régler au moins un élément du véhicule en fonction d'une valeur préférée d'un paramètre de réglage dudit au moins un élément.

Le siège comprend généralement au moins un système comportant un dispositif fonctionnel. Le dispositif fonctionnel peut par exemple être un dispositif de massage de l'utilisateur du siège, un dispositif de chauffage du siège ou encore un dispositif de ventilation du siège. Bien entendu, le système comporte souvent un ensemble de plusieurs dispositifs fonctionnels.

Le dispositif fonctionnel peut occuper une pluralité d'états distincts. Par exemple, un dispositif de ventilation du siège peut être dans un état éteint. Il peut également être dans un état actionné à un premier niveau. Il peut aussi être dans un état actionné à un second niveau dans lequel le dispositif de ventilation ventile avec plus de puissance qu'au premier niveau. Ainsi, dans ce cas, le dispositif de ventilation est apte à occuper sélectivement trois états distincts.

Le système comporte en outre un dispositif de commande qui permet de commander le dispositif fonctionnel. Le dispositif de commande permet à l'utilisateur, au moyen d'une interface de commande, d'installer le dispositif fonctionnel dans l'un des états possibles du dispositif fonctionnel.

Le dispositif de commande peut aussi être relié à un capteur destiné à mesurer un paramètre lié au siège, au véhicule ou à l'utilisateur du siège. Ce paramètre peut par exemple être une température de l'utilisateur ou un taux d'humidité dans un habitacle qui loge le siège.

Le dispositif de commande est généralement préréglé de façon à ce que lorsque le capteur mesure une certaine valeur du paramètre, le dispositif de commande actionne le dispositif fonctionnel. Toutefois, le préréglage du dispositif de commande peut ne pas convenir à l'utilisateur.

### Objet de l'invention

Un objectif de l'invention est de fournir un système pour siège pour véhicule adapté à différents profils d'utilisateurs.

### Bref résumé de l'invention

Pour ce faire, on prévoit selon l'invention un système pour siège de véhicule comprenant :
- un dispositif fonctionnel apte à occuper sélectivement Np états, Np étant un nombre entier positif,
- une interface d'entrée configurée pour récolter Nm paramètres, Nm étant un nombre entier positif, liés au véhicule et/ou au siège et/ou à un utilisateur du siège,
- un dispositif de commande configuré faire passer le dispositif fonctionnel de l'un Np états à l'autre des Np états,
- une interface de commande permettant à l'utilisateur de commander au dispositif fonctionnel, via le dispositif de commande, l'état qu'il occupe,
- une unité de stockage de données,
caractérisé en ce que le système est configuré pour :
- envoyer à l'unité de stockage de données les valeurs des Nm paramètres à chaque fois que l'utilisateur installe le dispositif fonctionnel dans l'un des Np états.

Ainsi, le système est configuré pour enregistrer les valeurs des Nm paramètres, lorsque l'utilisateur du système installe le dispositif fonctionnel dans l'un des Np états, et pour envoyer ces valeurs à une unité de stockage de données. Par « le système est configuré pour envoyer à l'unité de stockage de données les valeurs des Nm paramètres à chaque fois que l'utilisateur installe le dispositif fonctionnel dans l'un des Np états », on entend qu'un élément du système, distinct de l'unité de stockage, est configuré pour envoyer les données susmentionnées à l'unité de stockage de données. Cet élément du système peut notamment être le dispositif de commande ou un dispositif de communication dédié relié à l'interface d'entrée, au dispositif de commande et à l'unité de stockage de données.

L'unité de stockage est donc apte à déterminer le contexte dans lequel l'utilisateur installe le dispositif fonctionnel dans chacun des Np états. Ainsi, il est possible d'évaluer précisément le comportement de l'utilisateur vis-à-vis du dispositif fonctionnel et donc d'ajuster le fonctionnement du dispositif fonctionnel afin qu'il corresponde à l'utilisateur. Le système selon l'invention permet de fournir des sièges pour véhicule qui conviennent mieux à l'utilisateur.

Dans divers modes de réalisation du système selon l'invention, on peut éventuellement avoir recours en outre à l'une et/ou à l'autre des dispositions suivantes :
- le dispositif de commande est configuré pour envoyer à l'unité de stockage de données les valeurs des Nm paramètres à chaque fois que l'utilisateur installe le dispositif fonctionnel dans l'un des Np états ;
- l'interface d'entrée est apte à récolter les Nm paramètres au moyen d'au moins un capteur ;
- l'interface d'entrée est apte à récolter les Nm paramètres au moyen d'au moins une entrée de données par l'utilisateur ;
   l'interface d'entrée est donc apte à récolter des valeurs des Nm paramètres aussi bien grâce à un capteur que par entrée des données par l'utilisateur ; on notera toutefois que la récolte des valeurs des Nm paramètres au moyens de capteur est préférée, en effet, dans ce cas de figure, l'utilisateur n'a pas besoin d'entrée lui-même les données, ce qui améliore l'ergonomie du système ;
- l'unité de stockage de données vers laquelle le système est configuré pour envoyer les valeurs des Nm paramètres à chaque fois que l'utilisateur installe le dispositif fonctionnel dans l'un des Np états est un serveur distant du siège.
   ainsi, un serveur distant et centralisé peut traiter un grand nombre de données issues d'un grand nombre de sièges comprenant le système selon l'invention ;
- l'unité de stockage de données vers laquelle le système est configuré pour envoyer les valeurs des Nm paramètres à chaque fois que l'utilisateur installe le dispositif fonctionnel dans l'un des Np états est disposée dans le siège ;
   ainsi, le siège peut fonctionner de manière autonome ;
- l'unité de stockage de données est configurée pour calculer au moins un degré de corrélation entre l'un des Nm paramètres et l'état du dispositif fonctionnel ; cette caractéristique permet de fournir un système particulièrement avantageux dans le cadre de l'invention, puisqu'elle permet d'affiner au mieux et plus précisément la gestion d'au moins un élément du siège, l'unité de stockage est donc apte à déterminer lesquels des Nm paramètres ont une influence sur le changement d'état du dispositif fonctionnel, de plus, l'unité de stockage peut aussi être apte à écarter des valeurs aberrantes mesurées ponctuellement des Nm paramètres lors du changement d'état du dispositif fonctionnel ;
- l'unité de stockage de données est configurée pour :
   ∘ recevoir, du système, les valeurs des Nm paramètres récoltées respectivement par l'interface d'entrée et des informations relatives à l'état du dispositif fonctionnels,
   ∘ enregistrer les valeurs des Nm paramètres récoltées par l'interface d'entrée,
   ∘ définir, à partir des valeurs enregistrées, au moins Nm intervalles de valeurs associés respectivement aux Nm paramètres et à au moins l'un des Np états, et
   ∘ envoyer des informations définissant les au moins Nm intervalles au dispositif de commande ;
      cet envoi vers le dispositif de commande peut être fait directement ou via le dispositif de communication susmentionné ; l'unité de stockage est ainsi apte à analyser le comportement de l'utilisateur ;
- le dispositif de commande est en outre configuré pour :
   ∘ recevoir de l'unité de stockage de données Nm intervalles de valeurs, associés respectivement aux Nm paramètres et à l'un des Np états, et
   ∘ installer le dispositif fonctionnel dans cet état lorsque l'interface d'entrée récolte des valeurs des Nm paramètres incluses dans les Nm intervalles de valeurs ;
      le dispositif de commande permet ainsi de limiter le nombre d'opérations que doit effectuer l'utilisateur du siège ; le siège est donc plus simple à utiliser ;
- le système est en outre configuré pour envoyer régulièrement, de préférence chaque seconde ou chaque milliseconde, à l'unité de stockage de données les valeurs des Nm paramètres récoltées par l'interface d'entrée ;
- le système est en outre configuré pour envoyer à l'unité de stockage de données régulièrement, de préférence chaque seconde ou chaque milliseconde, une information relative à l'état occupé par le dispositif fonctionnel ;
   le serveur distant peut donc calculer et analyser régulièrement les valeurs des Nm paramètres et l'état dans lequel se trouve le dispositif fonctionnel ;

On prévoit aussi selon l'invention un ensemble comportant Z systèmes tels que décrits ci-dessus, Z étant un nombre entier positif, l'unité de stockage de données étant le serveur distant qui est en outre un serveur central pour les Z sièges, le serveur central étant configuré pour :
- recevoir, des Z systèmes, des valeurs des Nm paramètres récoltées respectivement par les interfaces d'entrée des Z systèmes et des informations relatives à l'état des Z dispositifs fonctionnels respectifs des Z systèmes,
- enregistrer les valeurs des Nm paramètres récoltées par les interfaces d'entrée des Z sièges,
- au moins Nm intervalles de valeurs associés respectivement aux Nm paramètres et à au moins l'un des Np états ;
- envoyer des informations définissant les au moins Nm intervalles aux Z systèmes.

Dans divers modes de réalisation de l'ensemble selon l'invention, on peut éventuellement avoir recours en outre à l'une et/ou à l'autre des dispositions suivantes :
- le serveur central est en outre configuré pour calculer au moins un degré de corrélation entre l'un des Nm paramètres et l'état du dispositif fonctionnel ;
   le serveur est donc apte à déterminer lesquels des Nm paramètres ont une influence sur le changement d'état du dispositif fonctionnel, en outre, le dispositif fonctionnel est apte à écarter des valeurs aberrantes mesurées ponctuellement des Nm paramètres lors du changement d'état du dispositif fonctionnel ;
- le serveur central est en outre configuré pour :
   ∘ définir à partir des valeurs des Nm paramètres enregistrées, X profils d'utilisateurs, X étant un nombre entier positif inférieur ou égal à Z,
   ∘ associer à chacun des Z systèmes l'un des X profils d'utilisateurs,
   ∘ définir pour chacun des X profils d'utilisateur, Nm intervalles de valeurs associés respectivement aux Nm paramètres, et ∘ envoyer, à chacun des Z systèmes, des informations définissant les Nm intervalles associés au profil d'utilisateurs auquel le système est associé.

On définit également selon l'invention un siège de véhicule comprenant un système tel que précédemment défini.

On prévoit enfin selon l'invention un procédé d'utilisation d'un système pour siège tel que défini ci-dessus comprenant au moins les étapes suivantes :
- on envoie à l'unité de stockage de données les valeurs des Nm paramètres chaque fois que l'utilisateur installe le dispositif fonctionnel dans l'un des Np états.

Le procédé peut aussi comprendre les étapes suivantes :
- on reçoit de l'unité de stockage de données Nm intervalles de valeurs, associés respectivement aux Nm paramètres et à l'un des Np états, et
- on installe le dispositif fonctionnel dans cet état lorsque l'interface d'entrée récolte des valeurs des Nm paramètres incluses dans les Nm intervalles de valeurs.

### Brève description des dessins

La présente invention sera mieux comprise et d'autres caractéristiques et avantages apparaîtront encore à la lecture de la description détaillée qui suit de trois modes de réalisation, donnés à titre d'exemples non limitatifs, en référence aux figures suivantes :
- la figure 1 est une vue d'un siège pour véhicule comprenant un système selon un premier mode de réalisation de l'invention,
- la figure 2 est un schéma-bloc illustrant le fonctionnement de ce siège, et
- la figure 3 est un schéma-bloc illustrant le fonctionnement d'un système pour un siège selon un second mode de réalisation de l'invention,
- la figure 4 est un schéma-bloc illustrant le fonctionnement du siège selon une variante du premier mode de réalisation de l'invention.

### Description détaillée de trois modes de réalisation de l'invention

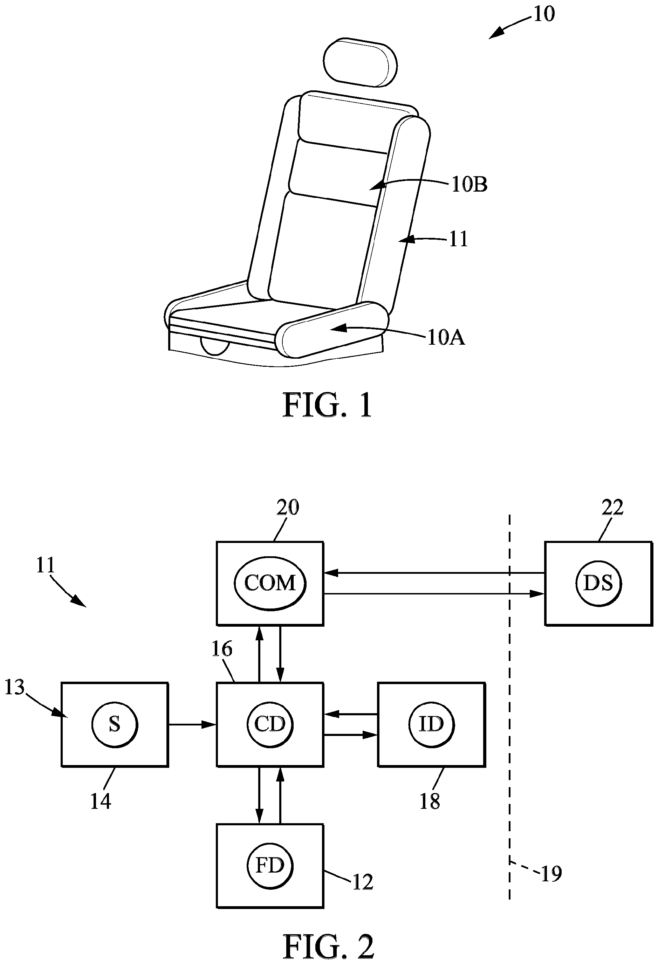

Par souci de clarté, seuls les éléments utiles à la compréhension des modes de réalisation décrits ont été représentés et seront détaillés. On notera en outre que sur les figures 2 à 4, les flèches représentent une émission d'information d'un élément vers un autre.

On a représenté à la figure 1 un siège 10 disposé dans un habitacle de véhicule. On notera que selon l'invention, le véhicule peut être de tout type et notamment automobile. En outre, le siège 10 peut bien entendu être un siège avant ou un siège arrière du véhicule. Le siège 10 comporte une assise 10A et un dossier 10B.

En outre, le siège 10 comporte un système 11 décrit ci-après. On notera que le système 11 peut être disposé entièrement dans le siège 10 mais qu'il est plus généralement disposé dans l'habitacle du véhicule. Ainsi, il peut par exemple être partiellement disposé dans le siège 10 et partiellement disposé dans le reste de l'habitacle.

### 1. Premier mode de réalisation de l'invention : système 11 évaluant un seul paramètre et dispositif fonctionnel apte à occuper sélectivement deux états

Comme illustré schématiquement sur la figure 2, le système 11 pour le siège 10 comporte un dispositif fonctionnel. Le dispositif fonctionnel peut être de tout type. Dans ce mode de réalisation, le dispositif fonctionnel est un dispositif de chauffage 12 du siège 10. Le dispositif fonctionnel peut aussi être un dispositif de ventilation du siège 10 avec ou sans nappe chauffante ou un dispositif de massage du siège 10, ou encore un dispositif configuré pour ajuster une position du siège 10. Par « ajuster une position du siège 10 », on entend aussi bien une position du siège 10 dans l'habitacle, par exemple le long d'une direction d'avancement du véhicule qui comporte le siège 10, autrement dit réglage longitudinal, qu'une position relative de deux éléments du siège 10 par exemple une position relative de l'assise 10A par rapport au dossier 10B, autrement dit réglage d'inclinaison de dossier 10B, ou encore les maintiens latéraux du dossier 10B ou de l'assise 10A. Enfin, on peut encore entendre un dispositif configuré pour ajuster la forme du siège 10, comme un réglage lombaire ou un réglage avant d'assise 10A. On entend encore un réglage hauteur du siège 10.

Sur la figure 2, on a matérialisé par un trait pointillé 19 une séparation entre l'intérieur et l'extérieur du véhicule qui héberge le siège 10.

Le dispositif de chauffage 12 du siège 10 comprend une nappe chauffante logée dans l'assise 10A du siège 10. Il est apte à occuper sélectivement deux états distincts. Un état éteint, dans lequel il ne chauffe pas, et un état actif, dans lequel il chauffe le siège 10. Ainsi, en référence au vocabulaire énoncé ci-dessus, dans ce mode de réalisation, Np est égal à 2.

En outre, le système 11 pour le siège 10 comprend au moins un capteur de température 14, un dispositif de commande 16 du dispositif de chauffage 12 et une interface de commande 18 du dispositif de chauffage 12. Par exemple, le siège 10 et/ou le véhicule pourra en outre comporter des capteurs de température 14 de type différent ou localisés à des endroits différents.

Le capteur de température 14 est par exemple logé dans le dossier 10B au voisinage d'une coiffe du dossier 10B. Ainsi, le capteur de température 14 capte une température voisine de celle d'un dos d'un utilisateur du siège 10. Le capteur de température 14 pourrait aussi être disposé dans l'habitacle, par exemple en face du siège 10. Le capteur de température 14 forme, dans le présent mode de réalisation, une interface d'entrée 13.

Le dispositif de commande 16 du dispositif de chauffage 12 est relié au dispositif de chauffage 12. Il est configuré pour actionner le dispositif de chauffage 12 et le faire passer de l'état éteint à l'état actif. Il est aussi configuré pour le dés-actionner et ainsi le faire passer de l'état actif à l'état éteint. Le dispositif de commande 16 du dispositif de chauffage 12 est donc configuré pour commander au dispositif de chauffage 12 l'état qu'il occupe et plus généralement pour faire passer le dispositif de chauffage 12 de l'un des états qu'il est apte à occuper à l'autre des états qu'il est apte à occuper.

L'interface de commande 18 du dispositif de chauffage 12 est par exemple disposée sur un accoudoir du siège 10 et permet à l'utilisateur de commander l'actionnement du dispositif de chauffage 12 par l'intermédiaire du dispositif de commande 16. Ainsi, l'interface de commande 18 du dispositif de chauffage 12 est reliée au dispositif de commande 16. L'interface de commande 18 peut aussi se présenter sous la forme d'un smartphone relié au dispositif de commande 16 par exemple par l'intermédiaire d'une connexion de type Wi-Fi.

De plus, comme illustré sur la figure 2, le capteur de température 14 est relié au dispositif de commande 16 et est apte à lui envoyer une valeur de température mesurée. Le dispositif de commande 16 est configuré pour que le capteur de température 14 lui envoie une température mesurée lorsque l'utilisateur change, via l'interface de commande 18, l'état du dispositif de chauffage 12. Le dispositif de commande 16 est aussi configuré pour que la température soit mesurée par le capteur de température 14 et transmise au dispositif de commande 16 chaque seconde. Selon une variante, elle est mesurée et transmise chaque dixième de seconde, centième de seconde ou millième de seconde. Ainsi, en référence au vocabulaire énoncé ci-dessus, dans ce mode de réalisation, Nm est égal à 1. De plus, l'interface d'entrée 13 est configurée pour récolter un paramètre, à savoir la température.

De plus, le système 11 comporte un dispositif de communication 20 qui peut également être partie intégrante du dispositif de commande 20. Le dispositif de communication 20 est relié au dispositif de commande 16 avec qui il est configuré pour échanger des informations. De plus, le dispositif de communication 20 est apte à communiquer avec une unité de stockage de données qui est ici un serveur 22 distant. Le dispositif de communication 20 peut communiquer avec le serveur 22 sur le réseau internet, par exemple sur le réseau Wi-Fi. Le dispositif de commande 16 est donc configuré pour communiquer avec le serveur 22 via le dispositif de communication 20. On notera de plus que selon une variante du présent mode de réalisation, l'unité de stockage de données est disposé dans le siège 10 de sorte qu'elle fait partie intégrante de celui-ci, voire plus généralement dans l'habitacle du véhicule. L'unité de stockage de données peut donc par exemple être disposée dans un tableau de bord du véhicule.

En outre, le dispositif de commande 16 est configuré pour envoyer au serveur 22 distant la valeur de température récoltée par l'interface d'entrée 13, dans le cas d'espèce, cette valeur est mesurée par le capteur de température 14, chaque fois que l'utilisateur installe le dispositif de chauffage 12 dans l'un des deux états qu'il est apte à occuper. Le dispositif de commande 16 est aussi apte à envoyer au serveur 22 distant une information relative au changement d'état. Le dispositif de commande 16 est donc apte à envoyer au serveur 22 distant l'information indiquant que le dispositif de chauffage 12 est passé, sous l'action de l'utilisateur, de l'état éteint à l'état actif ou de l'état actif à l'état éteint.

Ici, c'est le dispositif de commande 16 qui est configuré pour envoyer au serveur distant 22 la valeur de température récoltée par l'interface d'entrée. Toutefois, de manière générale, c'est le système 11 qui est configuré pour ce faire. Ainsi, il peut comporter un dispositif dédié à cette fonction qui peut être intégré ou non dans le dispositif de commande 16.

Le serveur 22 distant est apte à enregistrer et à analyser ces informations et à calculer une corrélation entre l'état qu'occupe le dispositif de chauffage 12 et la température mesurée par le capteur de température 14 à chaque changement d'état du dispositif de chauffage 12. Cette corrélation peut être notamment linéaire. Le serveur 22 distant détermine ainsi que l'état du dispositif de chauffage 12 et la température mesurée par le capteur de température 14 sont bien liées.

A partir de ce calcul, le serveur 22 distant est apte à définir deux intervalles de températures associés respectivement à l'état actif et à l'état éteint. Le serveur 22 distant est également apte à communiquer ces intervalles de température au dispositif de commande 16. Ainsi, le dispositif de commande 16 enregistre ces intervalles de sorte que lorsque le capteur de température 14 mesure une température comprise dans l'un des intervalles, le dispositif de commande 16 fait passer automatiquement le dispositif de chauffage 12 dans l'état associé à cet intervalle.

Par exemple, le serveur 22 distant peut définir un premier intervalle correspondant aux températures inférieures à 10°C et correspondant à l'état actif du dispositif de chauffage 12. Le serveur peut aussi définir un second intervalle correspondant aux températures supérieures à 18°C et correspondant à l'état éteint du dispositif de chauffage 12. Ainsi, lorsque la température récoltée par l'interface d'entrée 13, et donc ici mesurée par le capteur de température 14, est inférieure à 10°C, le dispositif de commande 16 fait passer le dispositif de chauffage 12 à l'état actif. Puis, lorsque la température mesurée par le capteur de température 14 augmente au-dessus des 18°C, le dispositif de commande 16 fait passer le dispositif de chauffage 12 à l'état éteint. Le dispositif de chauffage 12 reste à l'état éteint jusqu'à ce que la température mesurée soit de nouveau inférieure à 10°C. L'utilisateur n'a ainsi plus besoin d'utiliser l'interface de commande 18. Le système 11 ajuste en continue l'état du dispositif de chauffage 12.

De plus, optionnellement, le dispositif de commande 16 est configuré pour enregistrer et envoyer régulièrement, de préférence chaque seconde ou dixième de seconde ou centième de seconde ou millième de seconde ou chaque milliseconde, les valeurs de température récoltées par l'interface d'entrée, ici mesurées par le capteur de température 14 et l'information relative à l'état occupé par le dispositif de chauffage 12. Cela permet au serveur 22 distant d'analyser le comportement de l'utilisateur avec un beaucoup plus grand nombre de données.

On va maintenant décrire plus précisément le serveur 22 distant.

Le serveur 22 distant est de préférence un serveur central apte à recevoir des températures mesurées régulièrement en provenance de Z systèmes 11 des Z sièges 10, Z étant un nombre entier positif par exemple égal à 10 000. A ces températures mesurées sont associées des informations relatives à l'état des Z dispositifs de chauffage 12 respectifs des Z systèmes 11 des Z sièges 10.

En outre, le serveur 22 distant est configuré pour enregistrer et analyser ces données et ce, afin d'envoyer à chacun des Z systèmes 11 deux intervalles de températures associés respectivement aux deux états du dispositif de chauffage 12.

Pour ce faire, le serveur 22 distant calcule, pour chaque système 11 séparément, la température moyenne à laquelle les dispositifs de chauffage 12 respectifs sont passés de l'état éteint à l'état actif puis la température moyenne à laquelle les dispositifs de chauffage sont passés de l'état actif à l'état éteint. Puis, le serveur 22 distant définit spécifiquement, pour chaque système 11, deux intervalles de températures associés aux deux états. Ainsi, dans ce cas de figure, le serveur 22 distant définit les deux intervalles associés aux deux états du dispositif de chauffage 12 de manière individualisée pour chacun des Z systèmes 11. Le serveur 22 distant envoie ensuite aux Z dispositifs de commande 16 des Z systèmes 11 les informations définissant les deux intervalles de température.

Le serveur 22 distant est de plus configuré pour calculer un degré de corrélation entre la température mesurée et l'état du dispositif de chauffage 12, et ce pour définir les deux intervalles de valeurs associés respectivement aux deux états.

Alternativement, le serveur 22 distant peut être configuré pour calculer une moyenne générale des températures à laquelle les Z dispositifs de chauffage 12 ont été actionnés par les utilisateurs et une moyenne générale des températures à laquelle les Z dispositifs de chauffage 12 ont été éteints. Dans ce cas, le serveur 22 distant détermine pour tous les systèmes 11, deux intervalles identiques associés aux deux états. Ainsi, dans ce cas de figure, le serveur 22 distant définit les deux mêmes intervalles associés aux deux états du dispositif de chauffage 12 pour tous les Z systèmes 11. Le serveur 22 distant envoie ensuite aux Z dispositifs de commande 16 des Z systèmes 11 les informations définissant les deux intervalles de température.

Le serveur 22 distant peut aussi être configuré pour établir X profils d'utilisateurs, X étant un nombre entier positif inférieur ou égal à Z. Par exemple, le serveur 22 distant peut établir un premier profil rassemblant les utilisateurs qui actionnent en moyenne leurs dispositifs de chauffage 12 respectifs entre 10°C et 15°C. De plus, le serveur 22 distant établit un second profil rassemblant les utilisateurs qui actionnent en moyenne leurs dispositifs de chauffage 12 respectifs entre 5°C et 10°C. Ainsi, dans le cas d'espèce, X=2. Pour chaque profil d'utilisateurs, le serveur 22 distant calcule deux intervalles associés aux deux états du dispositif de chauffage 12 de la même manière qu'au paragraphe ci-dessus. Ainsi, dans ce cas de figure, le serveur 22 distant définit les deux mêmes intervalles associés aux deux états du dispositif de chauffage 12 pour des utilisateurs qui ont des comportements similaires. Le serveur 22 distant est en outre configuré pour envoyer à chacun des dispositifs de commande 16 des Z systèmes 11 des informations relatives aux deux intervalles de températures correspondant au profil auquel l'utilisateur du système 11 appartient.

Dans le cas où le système 11 comprend l'unité de stockage de données intégrée au siège 10, l'unité de stockage de données est de préférence apte à calculer la température moyenne à laquelle le dispositif de chauffage 12 est passé de l'état éteint à l'état actif puis la température moyenne à laquelle le dispositif de chauffage est passé de l'état actif à l'état éteint sous l'action de l'utilisateur. Puis, l'unité de stockage de données définit deux intervalles de températures associés aux deux états. En outre, l'unité de stockage de données communique ces intervalles de température au dispositif de commande 16.

### 2. Second mode de réalisation de l'invention : système 11 évaluant deux paramètres et dispositif fonctionnel apte à occuper sélectivement trois états

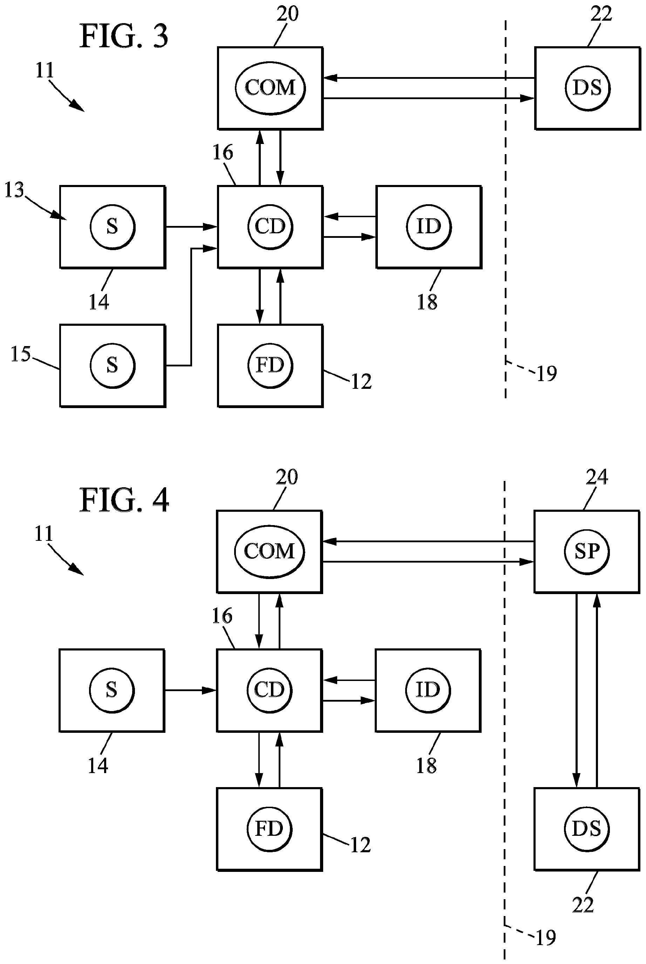

On va maintenant décrire un second mode de réalisation du siège 10 selon un second mode de réalisation de l'invention à l'aide notamment de la figure 3. Les références numériques des éléments similaires restent identiques et seules les différences avec le premier mode de réalisation vont être décrites.

Le siège 10 selon ce mode de réalisation comprend un second capteur qui est un capteur d'humidité 15. Le capteur d'humidité 15 peut être aussi logé dans le dossier 10B au voisinage de la coiffe. Le capteur d'humidité 15 est aussi relié au dispositif de commande 16 auquel il transmet régulièrement des valeurs d'humidité qu'il mesure, par exemple selon une périodicité similaire à celle du capteur de température 14. Le dispositif de commande 16 est ainsi configuré pour enregistrer régulièrement des valeurs de température et d'humidité mesurées respectivement par le capteur de température 14 et par le capteur d'humidité 15. Ainsi, dans ce mode de réalisation, et en référence au vocabulaire énoncé ci-dessus, Nm est égal à 2. De plus, le capteur de température 14 et le capteur d'humidité 15, forment dans le présent mode de réalisation, l'interface d'entrée 13.

Le dispositif de chauffage 12 est ici apte à occuper trois états : l'état éteint, un premier état actif et un second état actif dans lequel le dispositif de chauffage 12 chauffe avec plus d'intensité que dans le premier état actif. Ainsi, dans ce mode de réalisation, Np est égal à 3.

De nouveau, le dispositif de commande 16 est configuré pour enregistrer des valeurs de température et d'humidité chaque fois que l'utilisateur change l'état du dispositif de chauffage 12. Le dispositif de commande 16 est ainsi configuré pour envoyer ces valeurs de température et d'humidité au serveur distant 22.

Le serveur distant 22 va traiter chacun des paramètres températures et humidité de la même manière qu'indiquée au point 1 de la description qui portait sur le premier mode de réalisation.

Le serveur distant 22 est donc configuré pour définir six intervalles. Trois intervalles de températures sont associés respectivement aux trois états du dispositif de chauffage 12. De même, trois intervalles d'humidité sont associés respectivement aux trois états du dispositif de chauffage.

Le serveur 22 distant envoie ces six intervalles de températures et d'humidité au dispositif de commande 16.

Ainsi, lorsque les conditions de température et d'humidité correspondent à l'un des trois états du dispositif de chauffage 12, le dispositif de commande 16 commande au dispositif de chauffage 12 d'occuper cet état.

On notera que les deux paramètres température et humidité sont utilisés pour commander le dispositif de chauffage 12 car le degré de corrélation entre ces paramètres et l'état du dispositif de chauffage 12 est jugé satisfaisant.

Optionnellement, lorsqu'un degré de corrélation, calculé par le serveur 22 distant ou par le dispositif de commande 16, entre un paramètre et l'état du dispositif de chauffage 12 est inférieur à un niveau de corrélation prédéterminée, le serveur ignore ce paramètre et ne définit pas d'intervalle de valeurs de ce paramètres associé à cet état.

On notera en outre que le serveur distant 22 est apte à calculer une corrélation entre d'une part la température et l'humidité et d'autre part l'état du dispositif de chauffage 12. Si le niveau de corrélation calculé dépasse le niveau de corrélation calculé entre la température seule et l'état du système, cela signifie que l'humidité apporte une information supplémentaire qui accroit l'efficacité de l'analyse effectuée par le serveur distant 22. Le serveur distant 22 est alors configuré pour considérer la température et l'humidité pour déterminer les conditions dans lequel l'état du dispositif de chauffage 12 doit être modifié.

### 3. Troisième mode de réalisation de l'invention : système 11 évaluant Nm paramètres, Nm étant un nombre entier positif, et dispositif fonctionnel apte à occuper sélectivement Np états, Np étant un nombre entier positif

On va maintenant décrire un troisième mode de réalisation qui est une généralisation de ceux décrits aux points 2 et 3 de la description.

Le système 10 comporte une interface d'entrée 13 qui est configurée pour récolter Nm paramètres, Nm étant un nombre entier positif, liés au véhicule et/ou au siège 10 et/ou à l'habitacle et/ou à l'utilisateur. Ces Nm paramètres peuvent comprendre : une température dans l'habitacle ou dans le siège 10, un taux d'humidité dans l'habitacle ou dans le siège 10, un rythme cardiaque de l'utilisateur, une position du siège 10, aussi bien dans l'habitacle qu'une position relative de deux éléments du siège 10. Nm peut ainsi être égal à au moins un, deux, trois, quatre, cinq, six, sept, huit, neuf ou dix.

L'interface d'entrée 13 est configurée pour récolter les Nm paramètres au moyen d'au moins un capteur et/ou d'au moins une entrée de donnée effectuée par l'utilisateur. L'interface d'entrée 13 peut être configurée pour que l'utilisateur entre manuellement son poids ou sa taille par exemple. On notera toutefois que l'utilisation exclusive de capteurs, et donc d'au moins Nm capteurs, est préférée pour limiter le nombre d'opérations que doit effectuer l'utilisateur du siège 10.

En outre, le dispositif fonctionnel peut aussi bien être un dispositif de ventilation du siège 10, un dispositif de refroidissement du siège 10, un dispositif de massage de l'utilisateur du siège 10 ou un dispositif configuré pour ajuster la position du siège 10, aussi bien dans l'habitacle qu'une position relative de deux éléments du siège 10. Ce dispositif fonctionnel est apte à occuper Np états, Np étant un nombre entier positif.

On notera que quel que soit le dispositif fonctionnel, ce dernier est toujours apte à occuper un nombre fini d'états. En effet, dans le cas par exemple du dispositif de chauffage 12, celui-ci peut occuper un nombre fini d'états et ce nombre fini est fonction de la finesse de commande du dispositif de chauffage 12. Par exemple, si la température de commande du dispositif de chauffage 12 peut être modifiée par incrément de 0,1°C entre 10°C et 20°C, le dispositif de chauffage 12 peut occuper 101 états.

Le dispositif de commande 16 est de plus configuré pour enregistrer et envoyer au serveur distant 22 des valeurs mesurées régulièrement par les Nm capteurs et y associer une information relative à l'état, parmi les Np états possibles, qu'occupe le dispositif de chauffage 12. Le serveur distant 22 est, comme indiqué précédemment, un serveur central pour un grand nombre de sièges 10.

En outre, le dispositif de commande 16 est apte à recevoir du serveur distant 22 des instructions définissant Nm intervalles de valeurs associés respectivement aux Nm paramètres pour chacun des Np états du dispositif de chauffage 12.

Le dispositif de commande 16 est ainsi apte à faire passer le dispositif de chauffage 12 dans l'un des Np états lorsque les valeurs des Nm paramètres récoltées par l'interface d'entrée sont incluses respectivement dans les Nm intervalles de valeurs.

Alternativement, le dispositif de commande 16 est apte à faire passer le dispositif de chauffage 12 dans l'un des Np états lorsque la valeur récoltée par l'interface d'entrée 13 d'au moins l'un des Nm paramètres est incluse dans l'intervalle de valeur défini pour ce paramètre.

Encore alternativement, le dispositif de commande 16 est apte à faire passer le dispositif de chauffage 12 dans l'un des Np états lorsque les valeurs récoltées par l'interface d'entrée 13 d'au moins J paramètres, J étant un nombre entier positif inférieur à Nm, sont incluses respectivement dans les J intervalles de valeurs définis pour ces J paramètres.

On va maintenant décrire plus précisément le serveur distant 22.

Le serveur distant 22 est apte à recevoir des valeurs des Nm paramètres récoltées régulièrement, ou à chaque changement d'état du dispositif de chauffage 12 provoqué par l'utilisateur, par les interfaces d'entrées 13 des Z systèmes 11. Ces valeurs sont envoyées par les dispositifs de commande 16, via les dispositifs de communication 20 respectifs. Comme indiqué précédemment, Z est un nombre entier positif par exemple égal à 10 000. A ces valeurs des paramètres Nm mesurées sont associées des informations relatives à l'état des Z dispositifs de chauffage 12 respectifs des Z systèmes 11 des Z sièges 10.

En outre, le serveur distant 22 est configuré pour enregistrer et analyser ces données, et ce afin d'envoyer à chacun des Z systèmes 11 Nm intervalles de valeurs associés respectivement aux Nm paramètres et à au moins l'un des Np états. De préférence, le serveur distant 22 est configuré pour envoyer NmxNp intervalles, pour chacun des Nm paramètres, associés respectivement aux Np états du dispositif de chauffage 12.

Pour ce faire, le serveur distant 22 est configuré pour calculer, pour chaque système 11 séparément, les Nm intervalles associés à chacun des Np états. Ainsi, dans ce cas de figure, le serveur distant 22 définit les Nm intervalles associés à chacun des Np états du dispositif de chauffage 12 de manière individualisée pour chacun des Z systèmes 11. Le serveur distant 22 envoie ensuite aux Z dispositifs de commande 16 des Z systèmes 11 les informations définissant les NmxNp intervalles.

Alternativement, le serveur distant 22 peut être configuré pour calculer, de manière globale pour tous les Z systèmes 11, les NmxNp intervalles. Dans ce cas, le serveur 22 distant détermine pour tous les systèmes 11, Nm intervalles identiques associés à chacun des Np états. Ainsi, dans ce cas de figure, le serveur 22 distant définit les mêmes intervalles associés aux Np états du dispositif de chauffage 12 pour tous les Z systèmes 11. Le serveur 22 distant envoie ensuite aux Z dispositifs de commande 16 des Z systèmes 11 les informations définissant les NmxNp intervalles de température.

Le serveur 22 distant peut aussi être configuré pour établir X profils d'utilisateurs, X étant un nombre entier positif inférieur ou égal à Z. Pour chaque profil d'utilisateurs, le serveur 22 distant calcule NmxNp intervalles de la même manière qu'au paragraphe ci-dessus. Ainsi, dans ce cas de figure, le serveur 22 distant définit les mêmes Nm intervalles associés à chacun des Np états du dispositif de chauffage 12 pour des utilisateurs qui ont des comportements similaires. Le serveur 22 distant est en outre configuré pour envoyer à chacun des dispositifs de commande 16 des Z systèmes 11 des informations relatives aux Nm intervalles de températures correspondant à chacun des Np états adaptées au profil auquel l'utilisateur du système 11 appartient.

Le serveur distant 22 est de plus configuré pour calculer au moins un degré de corrélation entre l'un des Nm paramètres et l'état du dispositif fonctionnel, à partir des données reçues depuis les Z dispositifs de commande 16 respectifs des Z sièges.

De préférence, le serveur distant 22 est configuré pour calculer Nm degrés de corrélation entre chacun des Nm paramètres et l'état du dispositif fonctionnel pour définir de manière plus fine les NmxNp intervalles de valeurs associés respectivement aux deux états. En effet, lorsque l'un des degrés de corrélation est inférieur à un seuil prédéterminé, le paramètre est considéré comme non pertinent. Dans ce cas, l'intervalle associé à ce paramètre peut être considéré comme étant défini par la réunion de toutes les valeurs que ce paramètre peut prendre.

Le serveur distant 22 peut aussi être configuré pour calculer au moins un degré de corrélation entre deux des Nm paramètres et l'état du dispositif fonctionnel 12. Le serveur distant 22 teste ainsi si les deux paramètres interagissent de manière synergique avec l'état du dispositif fonctionnel 12, permettant ainsi d'affiner l'analyse du comportement des utilisateurs.

Bien entendu, le serveur distant 22 peut aussi être configuré pour calculer au moins un degré de corrélation entre trois, quatre, cinq, six, sept ou huit des Nm paramètres et l'état du dispositif fonctionnel 12.

On a illustré à la figure 4 une variante du système 11 selon le premier mode de réalisation. Selon cette variante, le dispositif de communication 20 est configuré pour communiquer avec le serveur 22 distant par l'intermédiaire d'un dispositif électronique de télécommunication porté par l'utilisateur. Le dispositif électronique de télécommunication se présente ici sous la forme d'un smartphone 24 de l'utilisateur.

Bien entendu, on pourra apporter à l'invention de nombreuses variantes sans sortir du cadre de celle-ci.

On pourra notamment utiliser tout type de capteur et les disposer dans tout type d'élément de siège.

## Revendications

1. Système (11) pour siège (10) de véhicule comprenant :
- un dispositif fonctionnel (12) apte à occuper sélectivement Np états, Np étant un nombre entier positif,
- une interface d'entrée (13) configurée pour récolter Nm paramètres, Nm étant un nombre entier positif, liés au véhicule et/ou au siège (10) et/ou à un utilisateur du siège (10),
- un dispositif de commande (16) configuré faire passer le dispositif fonctionnel (12) de l'un Np états à l'autre des Np états,
- une interface de commande (18) permettant à l'utilisateur de commander au dispositif fonctionnel (12), via le dispositif de commande (16), l'état qu'il occupe,
- une unité de stockage de données (22),
**caractérisé en ce que** le système (11) est configuré pour :
- envoyer à l'unité de stockage de données (22) les valeurs des Nm paramètres à chaque fois que l'utilisateur installe le dispositif fonctionnel (12) dans l'un des Np états.

2. Système (11) selon la revendication précédente, dans lequel l'interface d'entrée (13) est apte à récolter les Nm paramètres au moyen d'au moins un capteur (14, 15).

3. Système (11) selon l'une quelconque des revendications précédentes, dans lequel l'unité de stockage de données (22) vers laquelle le système (11) est configuré pour envoyer les valeurs des Nm paramètres à chaque fois que l'utilisateur installe le dispositif fonctionnel (12) dans l'un des Np états est un serveur distant (22) du siège (10).

4. Système (11) selon l'une quelconque des revendications 1 et 2, dans lequel l'unité de stockage de données (22) vers laquelle le système (11) est configuré pour envoyer les valeurs des Nm paramètres à chaque fois que l'utilisateur installe le dispositif fonctionnel (12) dans l'un des Np états est disposée dans le siège (10).

5. Système (11) selon l'une quelconque des revendications précédentes, dans lequel l'unité de stockage de données (22) est configurée pour calculer au moins un degré de corrélation entre l'un des Nm paramètres et l'état du dispositif fonctionnel (12).

6. Système (11) selon l'une quelconque des revendications précédentes, dans lequel l'unité de stockage de données (22) est configurée pour :
- recevoir, du système (11), les valeurs des Nm paramètres récoltées respectivement par l'interface d'entrée (13) et des informations relatives à l'état du dispositif fonctionnels (12),
- enregistrer les valeurs des Nm paramètres récoltées par l'interface d'entrée (13),
- définir, à partir des valeurs enregistrées, au moins Nm intervalles de valeurs associés respectivement aux Nm paramètres et à au moins l'un des Np états, et
- envoyer des informations définissant les au moins Nm intervalles au dispositif de commande (16).

7. Système (11) selon l'une quelconque des revendications précédentes, dans lequel le dispositif de commande (16) est en outre configuré pour :
- recevoir de l'unité de stockage de données (22) Nm intervalles de valeurs, associés respectivement aux Nm paramètres et à l'un des Np états, et
- installer le dispositif fonctionnel (12) dans cet état lorsque l'interface d'entrée (13) récolte des valeurs des Nm paramètres incluses dans les Nm intervalles de valeurs.

8. Système (11) selon l'une quelconque des revendications précédentes, dans lequel le système (11) est en outre configuré pour envoyer régulièrement, de préférence chaque seconde ou chaque milliseconde, à l'unité de stockage de données (22) les valeurs des Nm paramètres récoltées par l'interface d'entrée (13).

9. Système (11) selon l'une quelconques des revendications précédentes, dans lequel le système (11) est en outre configuré pour envoyer à l'unité de stockage de données (22) régulièrement, de préférence chaque seconde ou chaque milliseconde, une information relative à l'état occupé par le dispositif fonctionnel (16).

10. Ensemble comportant Z systèmes (11) selon la revendication 3, Z étant un nombre entier positif, et le serveur distant (22) est un serveur central (22) pour les Z sièges, le serveur central (22) étant configuré pour :
- recevoir, des Z systèmes (11), des valeurs des Nm paramètres récoltées respectivement par les interfaces d'entrée (13) des Z systèmes (11) et des informations relatives à l'état des Z dispositifs fonctionnels (12) respectifs des Z systèmes (11),
- enregistrer les valeurs des Nm paramètres récoltées par les interfaces d'entrée (13) des Z sièges (11),
- définir, à partir des valeurs enregistrées, au moins Nm intervalles de valeurs associés respectivement aux Nm paramètres et à au moins l'un des Np états, et
- envoyer des informations définissant les au moins Nm intervalles aux Z systèmes (11).

11. Ensemble selon la revendication précédente, dans lequel le serveur central (22) est en outre configuré pour calculer au moins un degré de corrélation entre l'un des Nm paramètres et l'état du dispositif fonctionnel (12) .

12. Ensemble selon l'une quelconque des revendications 8 et 9, dans lequel le serveur central (22) est en outre configuré pour :
- définir à partir des valeurs des Nm paramètres enregistrées, X profils d'utilisateurs, X étant un nombre entier positif inférieur ou égal à Z,
- associer à chacun des Z systèmes (11) l'un des X profils d'utilisateurs,
- définir pour chacun des X profils d'utilisateur, au moins Nm intervalles de valeurs associés respectivement aux Nm paramètres, et
- envoyer, à chacun des Z systèmes (11), des informations définissant les Nm intervalles associés au profil d'utilisateurs auquel le système (11) est associé.

13. Siège (10) de véhicule comportant un système (11) selon l'une quelconque des revendications 1 à 7.

14. Procédé d'utilisation d'un système (11) pour un siège (10) selon l'une quelconque des revendications 1 à 7, comprenant au moins les étapes suivantes :
- on envoie à l'unité de stockage de données (22) les valeurs des Nm paramètres chaque fois que l'utilisateur installe le dispositif fonctionnel (12) dans l'un des Np états.

15. Procédé selon la revendication précédente, comprenant en outre les étapes suivantes :
- on reçoit de l'unité de stockage de données (22) Nm intervalles de valeurs, associés respectivement aux Nm paramètres et à l'un des Np états, et
- on installe le dispositif fonctionnel (12) dans cet état lorsque l'interface d'entrée (13) récolte des valeurs des Nm paramètres incluses dans les Nm intervalles de valeurs.

## Patentansprüche

1. System (11) für einen Fahrzeugsitz (10), umfassend:
- eine Funktionseinrichtung (12), die dazu in der Lage ist, selektiv Np Zustände einzunehmen, wobei Np eine positive ganze Zahl ist,
- eine Eingabeschnittstelle (13), die dazu konfiguriert ist, Nm Parameter in Bezug auf das Fahrzeug oder/und den Sitz (10) oder/und einen Benutzer des Sitzes (10) zu erfassen, wobei Nm eine positive ganze Zahl ist,
- eine Steuereinrichtung (16), die dazu konfiguriert ist, die Funktionseinrichtung (12) von einem der Np Zustände in den anderen der Np Zustände umzuschalten,
- eine Steuerschnittstelle (18), die es dem Benutzer ermöglicht, über die Steuereinrichtung (16) den Zustand zu steuern, den die Funktionseinrichtung (12) einnimmt,
- eine Datenspeichereinheit (22),
**dadurch gekennzeichnet, dass** das System (11) dazu konfiguriert ist,
- die Werte der Nm Parameter jedes Mal an die Datenspeichereinheit (22) zu senden, wenn der Benutzer die Funktionseinrichtung (12) in einem der Np Zustände installiert.

2. System (11) nach dem vorhergehenden Anspruch, wobei die Eingabeschnittstelle (13) dazu ausgelegt ist, die Nm Parameter mittels wenigstens eines Sensors (14, 15) zu erfassen.

3. System (11) gemäß einem der vorhergehenden Ansprüche, wobei die Datenspeichereinheit (22), bezüglich der das System (11) so konfiguriert ist, dass es jedes Mal, wenn der Benutzer die Funktionseinrichtung (12) in einem der Np Zustände installiert, die Werte der Nm Parameter an diese sendet, ein von dem Sitz (10) entfernter Server (22) ist.

4. System (11) nach einem der Ansprüche 1 und 2, wobei die Datenspeichereinheit (22), bezüglich der das System (11) so konfiguriert ist, dass es jedes Mal, wenn der Benutzer die Funktionseinrichtung (12) in einem der Np Zustände installiert, die Werte der Nm Parameter an diese sendet, in dem Sitz (10) angeordnet ist.

5. System (11) gemäß einem der vorhergehenden Ansprüche, wobei die Datenspeichereinheit (22) so konfiguriert ist, dass sie wenigstens einen Korrelationsgrad zwischen dem einem der Nm Parameter und dem Zustand der Funktionseinrichtung (12) berechnet.

6. System (11) gemäß einem der vorhergehenden Ansprüche, wobei die Datenspeichereinheit (22) dazu konfiguriert ist:
- von dem System (11) die Werte der Nm Parameter, die jeweils von der Eingabeschnittstelle (13) erfasst werden, sowie Informationen über den Zustand der Funktionseinrichtung (12) zu erhalten,
- die von der Eingabeschnittstelle (13) erfassten Werte der Nm Parameter aufzuzeichnen,
- ausgehend von den aufgezeichneten Werten wenigstens Nm Werte-Intervalle zu definieren, die jeweils den Nm Parametern und wenigstens einem der Np Zustände zugeordnet sind, und
- Informationen, welche die wenigstens Nm Intervalle definieren, an die Steuereinrichtung (16) zu senden.

7. System (11) gemäß einem der vorhergehenden Ansprüche, wobei die Steuereinrichtung (16) ferner konfiguriert ist, um:
- von der Datenspeichereinheit (22) Nm Werte-Intervalle zu empfangen, die jeweils den Nm Parametern und einem der Np Zustände zugeordnet sind, und
- die Funktionseinrichtung (12) in diesem Zustand zu installieren, wenn die Eingabeschnittstelle (13) Werte der Nm Parameter erfasst, die in den Nm Werte-Intervallen enthalten sind.

8. System (11) gemäß einem der vorhergehenden Ansprüche, wobei das System (11) ferner so konfiguriert ist, dass es regelmäßig, vorzugsweise jede Sekunde oder jede Millisekunde, die Werte der von der Eingabeschnittstelle (13) erfassten Nm Parameter an die Datenspeichereinheit (22) sendet.

9. System (11) gemäß einem der vorhergehenden Ansprüche, wobei das System (11) ferner so konfiguriert ist, dass es der Datenspeichereinheit (22) regelmäßig, vorzugsweise jede Sekunde oder jede Millisekunde, eine Information bezüglich des von der Funktionseinrichtung (16) eingenommenen Zustands sendet.

10. Anordnung mit Z Systemen (11) nach Anspruch 3, wobei Z eine positive ganze Zahl ist, und der entfernte Server (22) ein zentraler Server (22) für die Z Sitze ist, wobei der zentrale Server (22) dazu konfiguriert ist:
- von den Z Systemen (11) Werte der Nm Parameter, die jeweils von den Eingabeschnittstellen (13) der Z Systeme (11) erfasst werden, sowie Informationen über den Zustand der jeweiligen Z Funktionseinrichtungen (12) der Z Systeme (11) zu erhalten,
- die von den Eingabeschnittstellen (13) der Z Sitze (11) erfassten Werte der Nm Parameter aufzuzeichnen,
- ausgehend von den aufgezeichneten Werten wenigstens Nm Werte-Intervalle zu definieren, die jeweils den Nm Parametern und wenigstens einem der Np Zustände zugeordnet sind, und
- Informationen, welche die wenigstens Nm Intervalle definieren, an die Z Systeme (11) zu senden.

11. Anordnung gemäß dem vorhergehenden Anspruch, wobei der zentrale Server (22) ferner so konfiguriert ist, dass er wenigstens einen Korrelationsgrad zwischen einem der Nm Parameter und dem Zustand der Funktionseinrichtung (12) berechnet.

12. Anordnung gemäß einem der Ansprüche 8 und 9, wobei der zentrale Server (22) ferner dazu konfiguriert ist:
- ausgehend von den Werten der aufgezeichneten Nm Parameter X Benutzerprofile zu definieren, wobei X eine positive ganze Zahl kleiner oder gleich Z ist,
- jedem der Z Systeme (11) eines der X Benutzerprofile zuzuordnen,
- für jedes der X Benutzerprofile wenigstens Nm Werte-Intervalle zu definieren, die jeweils den Nm Parametern zugeordnet sind, und
- an jedes der Z Systeme (11) Informationen zu senden, welche die Nm Intervalle definieren, die dem Benutzerprofil zugeordnet sind, dem das System (11) zugeordnet ist.

13. Fahrzeugsitz (10) mit einem System (11) nach einem der Ansprüche 1 bis 7.

14. Verfahren zur Verwendung eines Systems (11) für einen Sitz (10) nach einem der Ansprüche 1 bis 7, umfassend wenigstens die folgenden Schritte:
- die Werte der Nm Parameter werden jedes Mal an die Datenspeichereinheit (22) gesendet, wenn der Benutzer die Funktionseinrichtung (12) in einem der Np Zustände installiert.

15. Verfahren nach dem vorhergehenden Anspruch, welches ferner die folgenden Schritte umfasst:
- von der Datenspeichereinheit (22) werden Nm Werte-Intervalle empfangen, die jeweils den Nm Parametern und einem der Np Zustände zugeordnet sind, und
- die Funktionseinrichtung (12) wird in diesem Zustand installiert, wenn die Eingabeschnittstelle (13) Werte der Nm Parameter erfasst, die in den Nm Werte-Intervallen enthalten sind.

## Claims

1. System (11) for a vehicle seat (10), comprising:
- a functional device (12) able to selectively occupy Np states, where Np is a positive integer,
- an input interface (13) configured for collecting Nm parameters, where Nm is a positive integer, related to the vehicle and/or to the seat (10) and/or to a user of the seat (10),
- a control device (16) configured for changing the functional device (12) from one of the Np states to another of the Np states,
- a control interface (18) enabling the user to set the functional device (12), via the control device (16), to the state to be in,
- a data storage unit (22),
**characterized in that** the system (11) is configured for:
- sending the values of the Nm parameters to the data storage unit (22) each time the user places the functional device (12) in one of the Np states.

2. System (11) according to the preceding claim, wherein the input interface (13) is able to collect the Nm parameters by means of at least one sensor (14, 15).

3. System (11) according to any one of the preceding claims, wherein the data storage unit (22) to which the system (11) is configured to send the values of the Nm parameters each time the user places the functional device (12) in one of the Np states, is a server (22) remote from the seat (10).

4. System (11) according to any one of claims 1 and 2, wherein the data storage unit (22) to which the system (11) is configured to send the values of the Nm parameters each time the user places the functional device (12) in one of the Np states, is placed in the seat (10).

5. System (11) according to any one of the preceding claims, wherein the data storage unit (22) is configured for calculating at least one degree of correlation between one of the Nm parameters and the state of the functional device (12) .

6. System (11) according to any one of the preceding claims, wherein the data storage unit (22) is configured for:
- receiving, from the system (11), the values of the Nm parameters respectively collected by the input interface (13) and information concerning the state of the functional device (12),
- recording the values of the Nm parameters collected by the input interface (13),
- defining, from the recorded values, at least Nm ranges of values respectively associated with the Nm parameters and with at least one of the Np states, and
- sending information defining the at least Nm ranges to the control device (16).

7. System (11) according to any one of the preceding claims, wherein the control device (16) is further configured for:
- receiving, from the data storage unit (22), Nm ranges of values respectively associated with the Nm parameters and with one of the Np states, and
- placing the functional device (12) in this state when the input interface (13) collects values of the Nm parameters within the Nm ranges of values.

8. System (11) according to any one of the preceding claims, wherein the system (11) is further configured for sending periodically to the data storage unit (22), preferably every second or every millisecond, the values of the Nm parameters collected by the input interface (13).

9. System (11) according to any one of the preceding claims, wherein the system (11) is further configured for sending periodically to the data storage unit (22), preferably every second or millisecond, information concerning the state occupied by the functional device (16).

10. Assembly comprising Z systems (11) according to claim 3, where Z is a positive integer, and the remote server (22) is a central server (22) for the Z seats, the central server (22) being configured for:
- receiving, from the Z systems (11), values of the Nm parameters respectively collected by the input interfaces (13) of the Z systems (11) and information concerning the state of the Z respective functional devices (12) of the Z systems (11),
- recording the values of the Nm parameters collected by the input interfaces (13) of the Z seats (11),
- defining, from the recorded values, at least Nm ranges of values respectively associated with the Nm parameters and with at least one of the Np states, and
- sending information defining the at least Nm ranges to the Z systems (11).

11. Assembly according to the preceding claim, wherein the central server (22) is further configured for calculating at least one degree of correlation between one of the Nm parameters and the state of the functional device (12).

12. Assembly according to any one of claims 8 and 9, wherein the central server (22) is further configured for:
- defining X user profiles from the values of the Nm recorded parameters, where X is a positive integer less than or equal to Z,
- associating one of the X user profiles with each of the Z systems (11),
- defining, for each of the X user profiles, at least Nm ranges of values respectively associated with the Nm parameters, and
- sending, to each of the Z systems (11), information defining the Nm ranges associated with the user profile with which the system (11) is associated.

13. Vehicle seat (10) comprising a system (11) according to any one of claims 1 to 7.

14. Method for using a system (11) for a seat (10) according to any one of claims 1 to 7, comprising at least the following steps:
- the values of the Nm parameters are sent to the data storage unit (22) each time the user places the functional device (12) in one of the Np states.

15. Method according to the preceding claim, further comprising the following steps:
- Nm ranges of values respectively associated with the Nm parameters and with one of the Np states are received from the data storage unit (22), and
- the functional device (12) is placed in this state when the input interface (13) collects values of the Nm parameters that are within the Nm ranges of values.
